# EUROPEAN PATENT SPECIFICATION

(11) **EP 3 192 289 B1**
(45) Date of publication and mention of the grant of the patent: **21.03.2018**
(21) Application number: 15767665.1
(22) Date of filing: 10.09.2015
(51) Int. Cl.: H04W 4/16, G01C 21/34, H04W 4/02, H04L 29/06, G06F 3/0484

(54) **REAL-TIME LOCATION SHARING TO FACILITATE A PHYSICAL MEET-UP**
ECHTZEITSTANDORTTEILUNG ZUR ERMÖGLICHUNG EINES PHYSIKALISCHEN TREFFENS
PARTAGE D'EMPLACEMENT EN TEMPS RÉEL POUR FACILITER UNE RENCONTRE PHYSIQUE

(30) Priority: 10.09.2014 US 201414482880
(43) Date of publication of application: 19.07.2017
(73) Proprietor: Microsoft Technology Licensing, LLC, Redmond, WA 98052-6399 (US)
(72) Inventor: WOOLSEY, Kerry, Redmond, Washington 98052-6399 (US); HAMMERQUIST, Peter, Redmond, Washington 98052-6399 (US)
(74) Representative: CMS Cameron McKenna Nabarro Olswang LLP
(86) International application number: PCT/US2015/049339
(87) International publication number: WO 2016/040572

(56) References cited:
- WO-A1-2013/158091
- US-A1- 2011 306 366
- US-A1- 2014 213 280

## Description

### BACKGROUND

It is often common for people to talk on the phone and make arrangements to get together. Time and location are generally the two elements that are needed to coincide for a successful meet-up. Sometimes however, people need more flexibility in time and location to meet. This can mean that additional phone calls are needed to coordinate the meet-up, which can cause additional interruptions and wasted time. In addition, people find they could have met up earlier if they had only known where the other meeting attendee is located.

WO2013/158091 relates to dynamic route mapping between mobile devices in which a location module of a first mobile device is configured to provide a location indicator to a second mobile device only in response to a request from the second mobile device during a communication established between the two devices.

US2011/0306366 discloses sharing location during a phone call in which steps take place before the call is initiated to enable sharing of the location during the call.

### SUMMARY

The invention is defined by the subject matter of the appended independent claims. A location sharing component operating on a mobile computing device such as a smartphone, tablet, or laptop personal computer (PC) is configured to enable a local party and a remote party to share each other's locations during a phone call to facilitate a physical meet-up. The location sharing component exposes various options to set a length of time for the location sharing or the location can be shared up until the meet-up occurs. User interfaces (UIs) exposed by the location sharing component can provide directions and dynamically updated maps which show the locations of the parties. The location sharing experience can be persisted after the phone call ends by showing updates to the directions and maps and by surfacing notifications when the parties are close so that they can start looking for each other. The location sharing time interval can be extended if it is due to expire before the meet-up occurs.

In various illustrative examples, location sharing can be initiated from within a voice or video calling experience and locations may be shared with all parties on a call in multi-party calling scenarios. Location sharing may also be initiated in asynchronous forms of communication such as messaging and email. In cases in which the remote party's device is not configured with a location sharing component, an external web service can be used to support a location sharing experience on the remote device. The location sharing component can provide an estimated meet-up time based on the parties' locations as well as contextual data such as traffic level and mode of travel (e.g., walking, car, plane, public or mass transportation such as bus, subway, etc.). Maps and directions and other location information can be shown on a device's lock screen or other UI so that a user does not need to unlock the device to keep up with the progress towards the meet-up. The location sharing component can also be configured to interoperate with a digital assistant that executes with the device in some implementations.

Advantageously, the present location sharing can operate on any scale from large cities to small neighborhoods, and can operate in different types of locations such as urban and rural areas, shopping areas, malls, corporate and college campuses, theme parks, and the like. Location sharing can also be applied to a variety of contexts including business, personal, recreation, travel, etc., whether the meet-up is between two people or a group of people. By enabling a participant in an upcoming meet-up to see location status of the other participants, the meet-up experience is improved as planning can be based on accurate and current information without needing to place additional calls or send messages. In addition, having current location status of the other meet-up participants, and knowing that they know your location status as well can also reduce the emotional stress and pressure when trying to make the meet-up, for example, when running late due to extra traffic congestion and the like.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. Furthermore, the claimed subject matter is not limited to implementations that solve any or all disadvantages noted in any part of this disclosure. It may be appreciated that the above-described subject matter may be implemented as a computer-controlled apparatus, a computer process, a computing system, or as an article of manufacture such as one or more computer-readable storage media. These and various other features may be apparent from a reading of the following Detailed Description and a review of the associated drawings.

### BRIEF DESCRIPTION OF THE DRAWINGS

FIG 1 shows an illustrative environment in which devices having communications capabilities interact over a network;
FIG 2 shows illustrative communications between devices;
FIG 3 shows illustrative sharing among multiple device users;
FIG 4 shows an illustrative layered architecture that includes an application layer, operating system (OS) layer, and hardware layer;
FIGs 5, 6, and 7 show illustrative interfaces between a user and a location sharing component;
FIG 8 shows illustrative inputs to the location sharing component and an illustrative taxonomy of features and functions that may be supported by the location sharing component;
FIG 9 shows an illustrative arrangement in which the location sharing component interacts with a digital assistant that may be instantiated on a device;
FIGs 10- 26 show screen captures of illustrative user interfaces (UIs) displayed on a device at various points in a location sharing session during and after a phone call;
FIG 27 shows illustrative interaction between real-time sharing components that are instantiated on respective devices;
FIG 28 shows illustrative interactions between a real-time sharing component on one device, a remote service provider, and client components on another device;
FIG 29 shows a screen capture of an illustrative UI exposed by a device that provides a link to a location sharing experience;
FIGs 30 and 31 show illustrative methods that may be performed when implementing the present location sharing;
FIG 32 is a simplified block diagram of an illustrative computer system such as a personal computer (PC) that may be used in part to implement the present location sharing;
FIG 33 shows a block diagram of an illustrative device that may be used in part to implement the present location sharing; and
FIG 34 is a functional block diagram of an illustrative mobile device.

Like reference numerals indicate like elements in the drawings. Elements are not drawn to scale unless otherwise indicated. It is emphasized that the particular UIs displayed in the drawings can vary from what is shown according to the needs of a particular implementation. While UIs are shown in portrait mode in the drawings, the present arrangement may also be implemented using a landscape mode.

### DETAILED DESCRIPTION

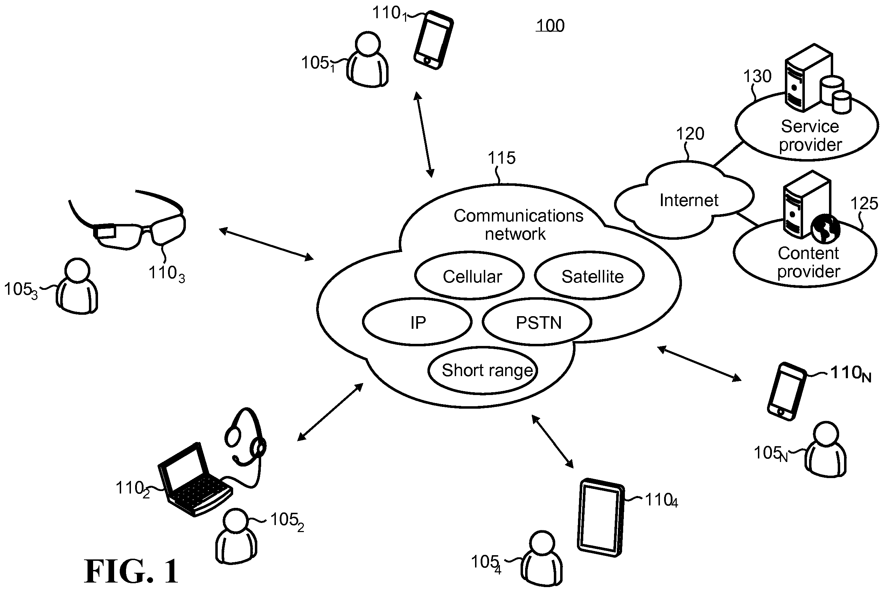

FIG 1 shows an illustrative communications environment 100 in which various users 105 employ respective devices 110 that communicate over a communications network 115. The devices 110 provide various communication capabilities, such as voice and video calling and messaging, and typically support data-consuming applications such as Internet browsing and multimedia (e.g., music, video, etc.) consumption in addition to various other features. The devices 110 may include, for example, user equipment, mobile phones, cell phones, feature phones, tablet computers, and smartphones which users often employ to make and receive voice and/or multimedia (i.e., video) calls, engage in messaging (e.g., texting), use applications and access services that employ data, browse the World Wide Web, and the like. However, alternative types of electronic devices are also envisioned to be usable within the communications environment 100 so long as they are configured with communication capabilities and can connect to the communications network 115. Such alternative devices variously include handheld computing devices, PDAs (personal digital assistants), portable media players, phablet devices (i.e., combination smartphone/tablet devices), wearable computing devices (e.g., glasses, watches, etc.), navigation devices such as GPS (Global Positioning System) systems, laptop PCs (personal computers), or the like. In the discussion that follows, the use of the term "device" is intended to cover all devices that are configured with communication capabilities and are capable of connectivity to the communications network 115.

The various devices 110 in the environment 100 can support different features, functionalities, and capabilities (here referred to generally as "features"). Some of the features supported on a given device can be similar to those supported on others, while other features may be unique to a given device. The degree of overlap and/or distinctiveness among features supported on the various devices 110 can vary by implementation. For example, some devices 110 can support touch controls, gesture recognition, and voice commands, while others may enable a more limited UI. Some devices may support video consumption and Internet browsing, while other devices may support more limited media handling and network interface features.

As shown, the devices 110 can access the communications network 115 in order to implement various user experiences. The communications network can include any of a variety of network types and network infrastructure in various combinations or subcombinations including cellular networks, satellite networks, IP (Internet Protocol) networks such as Wi-Fi and Ethernet networks, a public switched telephone network (PSTN), and/or short range networks such as Bluetooth networks. The network infrastructure can be supported, for example, by mobile operators, enterprises, Internet service providers (ISPs), telephone service providers, data service providers, and the like. The communications network 115 typically includes interfaces that support a connection to the Internet 120 so that the mobile devices 110 can access content provided by one or more content providers 125 and access a service provider 130 in some cases.

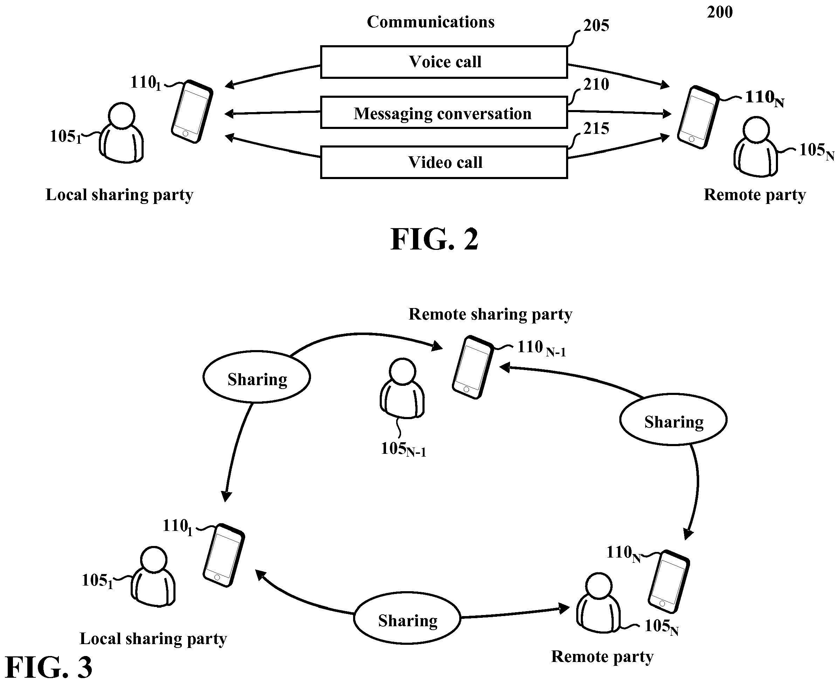

The devices 110 and communications network 115 may be configured to enable device-to-device communication. As shown in FIG 2, such device-to-device communications 200 can include, for example, voice calls 205, messaging conversations 210, and video calls 215. Support for device-to-device communications 200 may be provided using various applications that run on a device 110.

The communications 200 can be utilized to support the present location sharing to facilitate a physical meet-up. The location sharing can be implemented between a local sharing party 105₁ and a single remote party 105_{N} or between the local sharing party and multiple remote parties in a conference call scenario as shown in FIG 3. In some cases, one or more of the remote parties typically can also implement location sharing back with the local and/or with another party.

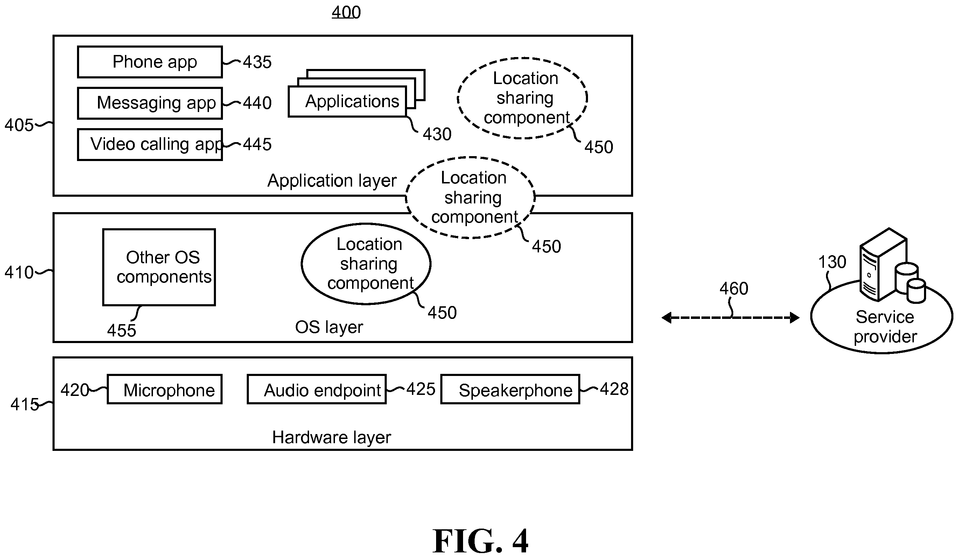

The present location sharing may be implemented using components that are instantiated on a given device. In addition, as discussed below, location sharing can also be implemented, in whole or part, using a web service supported by a remote service provider (e.g., service provider 130 in FIG 1). FIG 4 shows an illustrative layered architecture 400 that supports communication applications and other components. The architecture 400 is typically implemented in software, although combinations of software, firmware, and/or hardware may also be utilized in some cases. The architecture 400 is arranged in layers and includes an application layer 405, an OS (operating system) layer 410, and a hardware layer 415. The hardware layer 415 provides an abstraction of the various hardware used by the device 110 (e.g., input and output devices, networking and radio hardware, etc.) to the layers above it. In this illustrative example, the hardware layer supports a microphone 420 and audio endpoint 425 which may include, for example, a wired or wireless headset/earpiece, external speaker/device, and the like, and the device's speakerphone 428.

The application layer 405 in this illustrative example supports various applications (apps) 430 (e.g., web browser, map application, email application, etc.), as well as a phone app 435, messaging app 440, and video calling app 445, such as Skype™. The applications are often implemented using locally executing code. However in some cases, these applications may rely on services and/or remote code execution provided by remote servers or other computing platforms such as those supported by the service provider 130 or other cloud-based resources as indicated by line 460. While the apps 430, 435, 440, and 445 are shown here as components that are instantiated in the application layer 405, it may be appreciated that the functionality provided by a given application may be implemented, in whole or part, using components that are supported in either the OS or hardware layers.

The OS layer 410 supports a location sharing component 450 and various other OS components 455. In some cases, location sharing component 450 can interact with the service provider. That is, the location sharing component 450 in some implementations can partially utilize or fully utilize remote code execution supported at the service provider 130, or using other remote resources. In addition, it may utilize and/or interact with the other OS components 455 (and/or other components that are instantiated in the other layers of the architecture 400) as may be needed to implement the various features and functions described herein. The real-time location sharing component 450 may alternatively be instantiated using elements that are instantiated in both the OS and application layers or be configured as an application, as shown in FIG 4 using the dashed-line ovals. It may also be appreciated that the functionality provided by the location sharing component 450 can be implemented, in whole or part, using components that are supported in either the application or hardware layers.

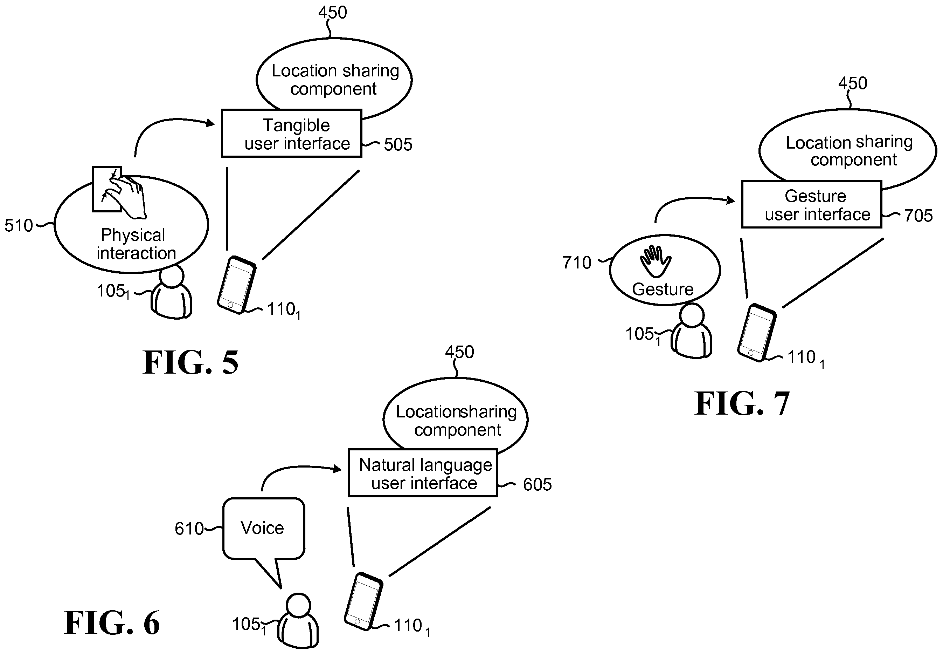

A user can typically interact with the real-time sharing component 450 (FIG 4) in a number of ways depending on the features and functionalities supported by a given device 110. For example, as shown in FIG 5, the location component 450 may expose a tangible user interface 505 that enables the user 105 to employ physical interactions 510 in support of the location sharing experiences on the device 110. Such physical interactions can include manipulation of physical and/or virtual controls such as buttons, menus, keyboards, etc., using touch-based inputs like tapping, flicking, dragging, etc. on a touch screen, and the like. In some implementations, the location sharing component may expose a natural language user interface 605 shown in FIG 6, or alternatively a voice command-based user interface (not shown), with which the user employs voice 610 to provide various inputs to the device 110. In other implementations, the location sharing component 450 may expose a gesture user interface 705 shown in FIG 7 with which the user 105 employs gestures 710 to provide inputs to the device 110. It is noted that in some cases, combinations of user interfaces may be utilized where the user may employ, for example, both voice and physical inputs to interact with the real-time sharing component 450 and the device 110. The user gestures can be sensed using various techniques such as optical sensing, touch sensing, proximity sensing, and the like.

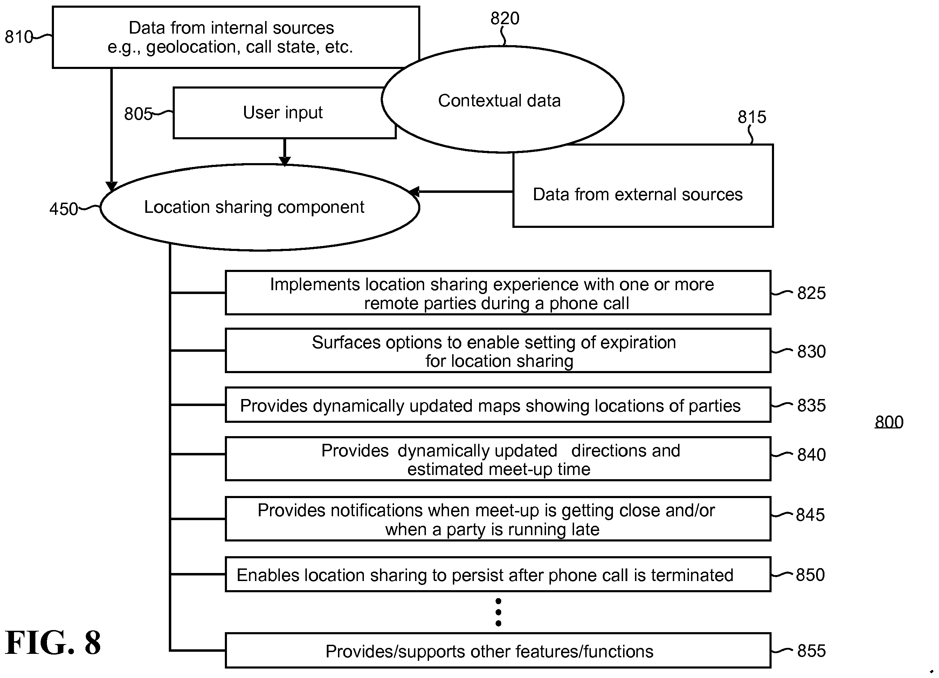

FIG 8 shows an illustrative taxonomy of functions 800 that may typically be supported by the location sharing component 450. Inputs to the location sharing component 450 typically can include user input 805 (in which such user input can include input from either or both the local and remote parties to a given sharing session in some cases), data from internal sources 810, and data from external sources 815. For example, data from internal sources 810 could include the current geolocation of the device 110 that is reported by a GPS (Global Positioning System) component on the device, or some other location-aware component. The externally sourced data 815 includes data provided, for example, by external systems, databases, services, and the like such as the service provider 130 (FIG 1). The various inputs can be used alone or in various combinations to enable the location sharing component 450 to utilize contextual data 820 when it operates. Contextual data can include, for example, time/date, the user's location, language, schedule, applications installed on the device, the user's preferences, the user's behaviors (in which such behaviors are monitored/tracked with notice to the user and the user's consent), stored contacts (including, in some cases, links to a local user's or remote user's social graph such as those maintained by external social networking services), call history, messaging history, browsing history, device type, device capabilities, communications network type and/or features/functionalities provided therein, mobile data plan restrictions/limitations, data associated with other parties to a communication (e.g., their schedules, preferences, etc.), and the like. Additional illustrative examples of the use of context by the location sharing component are provided below.

As shown, the functions 800 illustratively include implementing a location sharing experience with one or more remote parties (as indicated by reference numeral 825). A given location sharing experience can be initiated from within a calling application (e.g., voice and video calling). The location sharing can typically go in both directions (as shown in FIG 3 and described in the accompanying text). The functions 800 may also include surfacing various options to enable a user to set a length of time for the user's location to be shared with others (830); providing dynamically updated maps that show locations of parties to a meet-up (835); providing dynamically updated directions and estimates for meet-up times based on current conditions and context (840); providing notifications when a meet-up is getting close and/or when a party to the meet-up is running late (845); enabling a location sharing experience to be persisted after the call ends (850); and providing and supporting other features and functionalities (855). The list of functions 800 is not intended to be exhaustive and other functions may be provided by the location sharing component as may be needed for a particular implementation of the present location sharing.

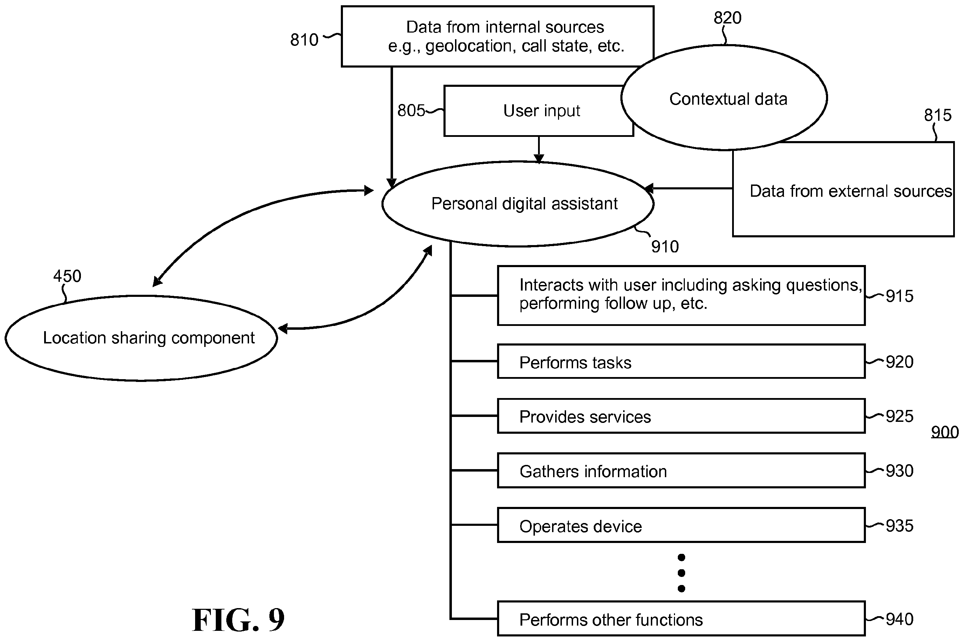

In some implementations, the location sharing component 450 can be configured to interoperate with a personal digital assistant that is operable on the device 110. As shown in FIG 9, a personal digital assistant 910 can expose a variety of functions 900 which illustratively include interacting with the user 915 (through the natural language user interface and/or other user interfaces, for example); performing tasks 920 (e.g., making note of appointments in the user's calendar, sending messages and emails, etc.); providing services 925 (e.g., answering questions from the user, mapping directions to a destination, etc.); gathering information 930 (e.g., finding information requested by the user about a book or movie, locating the nearest Italian restaurant, etc.); operating the device 935 (e.g., setting preferences, adjusting screen brightness, turning wireless connections such as Wi-Fi and Bluetooth on and off, etc.); and performing various other functions 940. The list of functions 900 is not intended to be exhaustive and other functions may be provided by the digital assistant as may be needed for a particular implementation of the present location sharing.

In a similar manner as with the arrangement shown in FIG 8, inputs to the digital assistant 910 can include user input 805, data from internal sources 810, data from external sources 815, and contextual data 820.

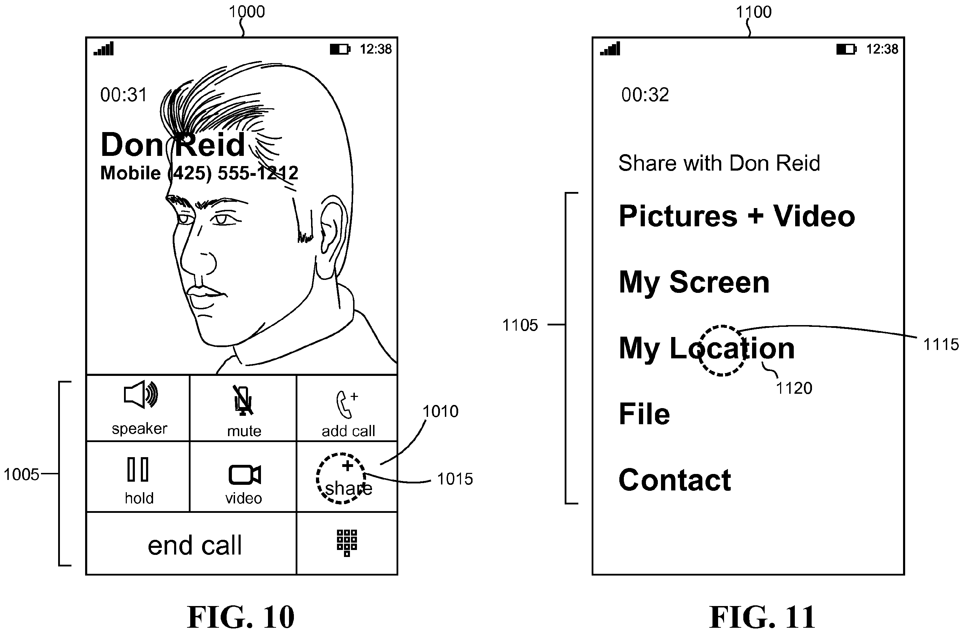

FIGs 10- 26 show screen captures of illustrative user interfaces (UIs) displayed on a device at various points in a location sharing experience during and after a phone call. In this particular example, the call and sharing are implemented with a single remote party. However, it may be appreciated that this example is illustrative and that multi-party (i.e., conference calling) may also be implemented using the present location sharing to facilitate a physical meet-up. It is noted that all the UIs shown in the drawings are intended to be illustrative and that the presentation of information, exposed features and controls, and the overall look and feel of the UI can vary by implementation from what is shown. As shown in FIG 10, the UI 1000 shows a picture and name of the called party (i.e., the remote party, here named "Don Reid"), the dialed number, and various call controls 1005 at the bottom of the UI. In this example, the local and remote parties use the call to discuss a planned physical meet-up for later in the day.

When the user (i.e., the local sharing party) selects a share button 1010 that is exposed on the phone app's UI, here using a touch 1015 on a touch screen or other interaction, a sharing UI 1100 is surfaced as shown in FIG 11 so that the user can initiate a location sharing experience with the remote party. The location sharing component 450 (FIG 4) typically will automatically switch the device to operate in speakerphone mode so that the user can continue to converse with the remote party while interacting with the location sharing UIs.

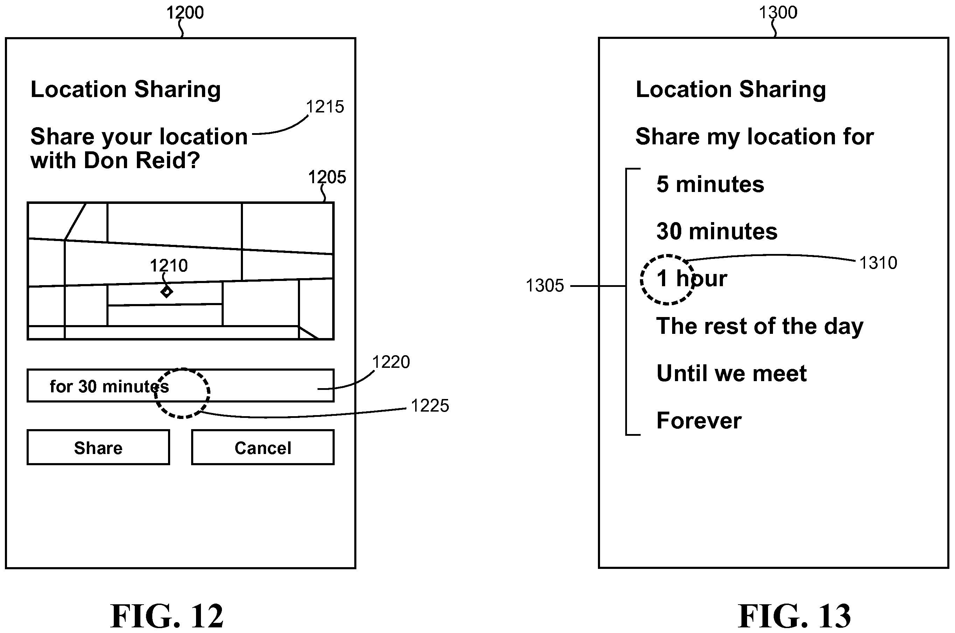

The UI 1100 provides a number of sharing options 1105 that can be invoked by the user by touch. In this example, the user employs a touch 1115 to select the location sharing option 1120 among various options to share various other types of content. The user's selection action surfaces UI 1200 in FIG 12 which provides a map 1205 that shows the location of the user (i.e., the calling party) using a marker 1210. UI 1200 also displays a text string 1215 that asks for confirmation that the user wants to share his or her location with the remote party.

In this example, a period for sharing 1220 is displayed with a default time period of 30 minutes. In some implementations, the location sharing component can expose various controls such as user preferences for controlling the default time period. Here, the user can change the time period for sharing using a touch 1225 which invokes the presentation of UI 1300 in FIG 13 which provides a variety of sharing time periods 1305 for user selection. In this particular example, the sharing time periods can be specific and range from 5 minutes to the rest of the day. That is, the sharing period can expire at a specific time. The user's location can be shared for non-specific periods in which the location sharing expiration coincides with the occurrence of an event. For example, the location sharing period can expire when the meet-up actually occurs (and in some cases adding a time buffer to ensure that location information is shared for a sufficient time). The location sharing can also continue forever without expiration (i.e., the location information is permanently shared so that the remote party can always see the location of the local party, for example when the local party is a child and the remote party is the child's parent).

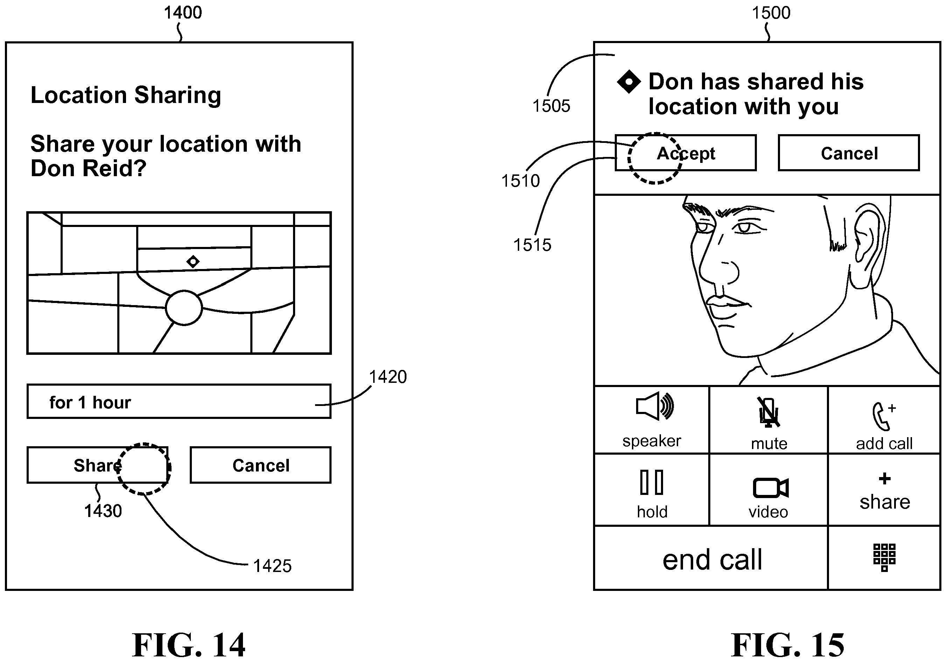

The user has employed a touch 1310 to select the 1 hour location sharing time period, as shown, which invokes presentation of UI 1400 in FIG 14. Here, the time period for sharing 1420 has been updated by the location sharing component 450 to reflect the user's selected sharing time period. The user employs a touch 1425 on the share button 1430 to share the user's location with the remote party for the specified location sharing time period.

In typical real-time location sharing for facilitating a physical meet-up when the local party's location is shared with the remote party, the remote party will also share its location back. That way both participants in the planned meet-up can see where the other is located which can help each of them plan their time and also ensure they can find each other at the meet-up location. Accordingly, the remote party can use a similar location sharing process at the remote party's device as described above to share location information with the local party. As shown in UI 1500, the remote party then initiates location sharing with the local party, a notification 1505 is presented on the phone app's UI to let the user know that the location information is being shared. The UI exposes controls to accept or reject the sharing.

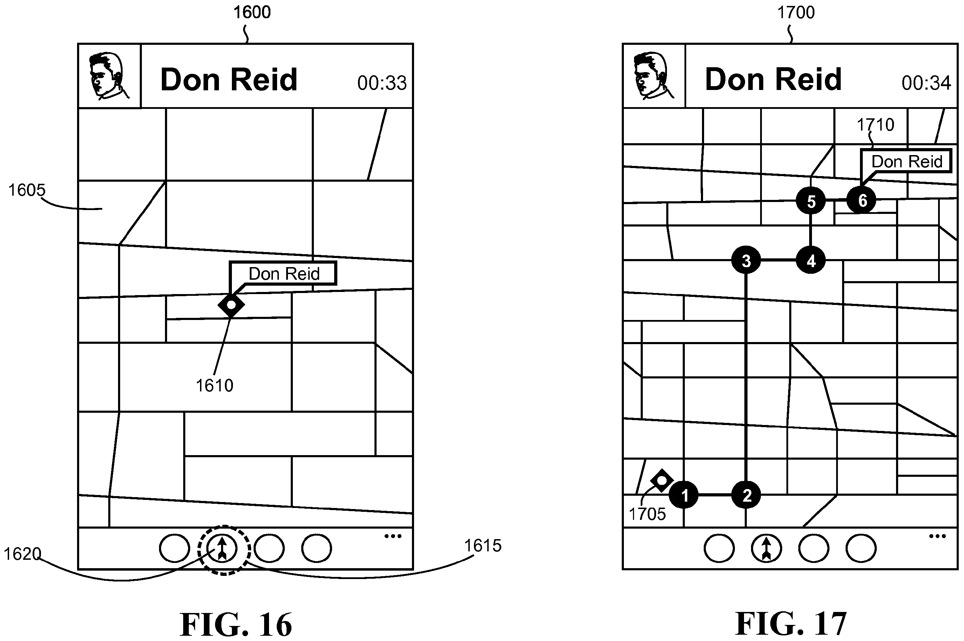

In this example, the user has accepted the sharing by a touch 1510 on the accept button 1515 which invokes presentation of UI 1600 in FIG 16 which shows a map 1605 which includes a marker 1610 to indicate the remote party's current location. As noted above, the location sharing component 450 (FIG 4) can typically dynamically update the location information displayed on the UI so that the map and marker can change as the remote user changes location. The user has employed a touch 1615 on directions button 1620 to bring up directions as shown in UI 1700 in FIG 17. The local party's location is shown by marker 1705 and the remote party is shown with a flag 1710. In this example, turn-by-turn directions are provided which are typically calculated taking into account available context data (e.g., contextual data 820 in FIG 8) such as traffic conditions, closed roads, the user's mode of transit (whether walking, driving, using public transportation, etc.), as well as user preferences (e.g., preferred routes, avoiding tolls, etc.). In some cases, additional details about the directions and user controls can be surfaced through other UIs and menus (not shown).

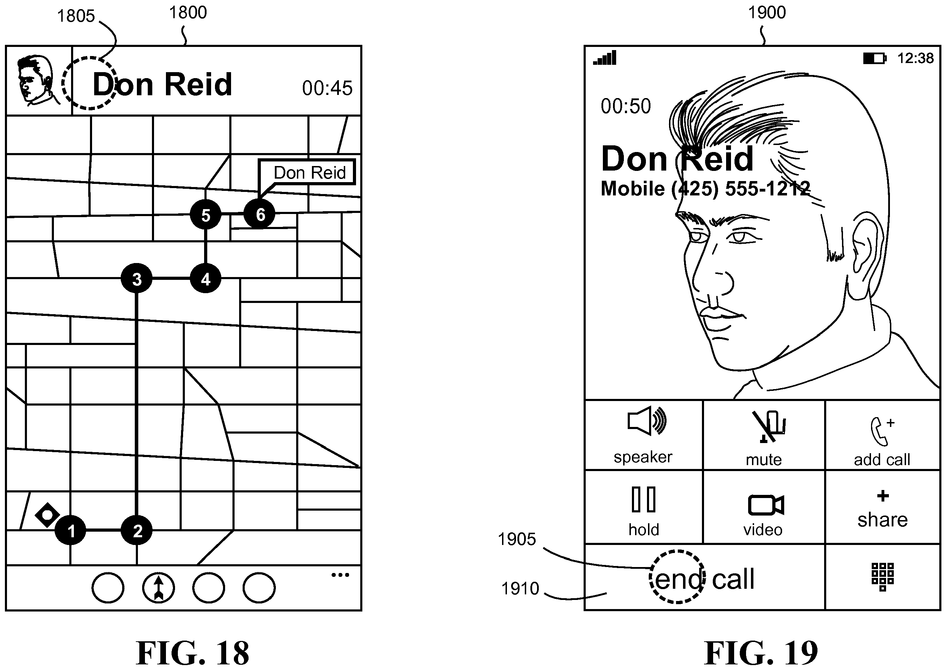

Continuing with the example of the call between the parties to discuss the planned meet-up later that day, once the user has reviewed the map and directions, the user can employ a touch 1805 on the remote user's avatar or name, as shown in UI 1800 in FIG 18, to return back to the main UI exposed by the phone app as shown in UI 1900 in FIG 19. The user then ends the call with the remote party by a touch 1905 on the end call button 1910.

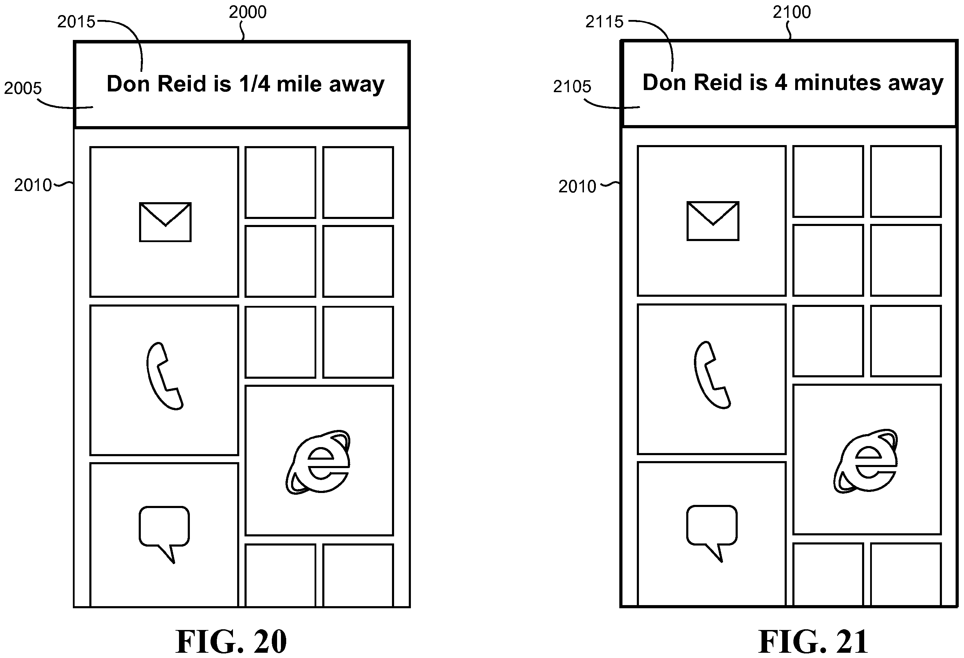

After the call is terminated, the location sharing component 450 can persist the sharing experience so that the parties to the meet-up can continue to get updates as to location status of the others. For example, as shown in UI 2000 in FIG 20, a notification 2005 is exposed as a pop-up on the device's start screen 2010 to inform the user that the remote party is nearby using text string 2015. The particular threshold distance between the parties that is utilized to initiate the notification 2005 can vary by implementation and context. For example, different thresholds may be used depending on the location context whether it is a city, shopping mall, theme park, etc.

Similarly, as shown in UI 2100 in FIG 21, a notification 2105 can be surfaced using the text string 2115 when the location sharing component estimates that the local and remote parties are within some threshold time interval of being in the same physical location. The location sharing component can make the estimate by applying available contextual and historical data (e.g., how long it took a party to cover a distance in the past) in some cases.

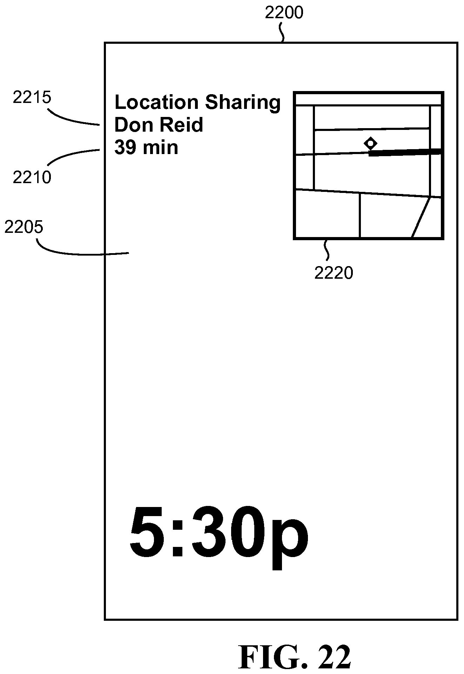

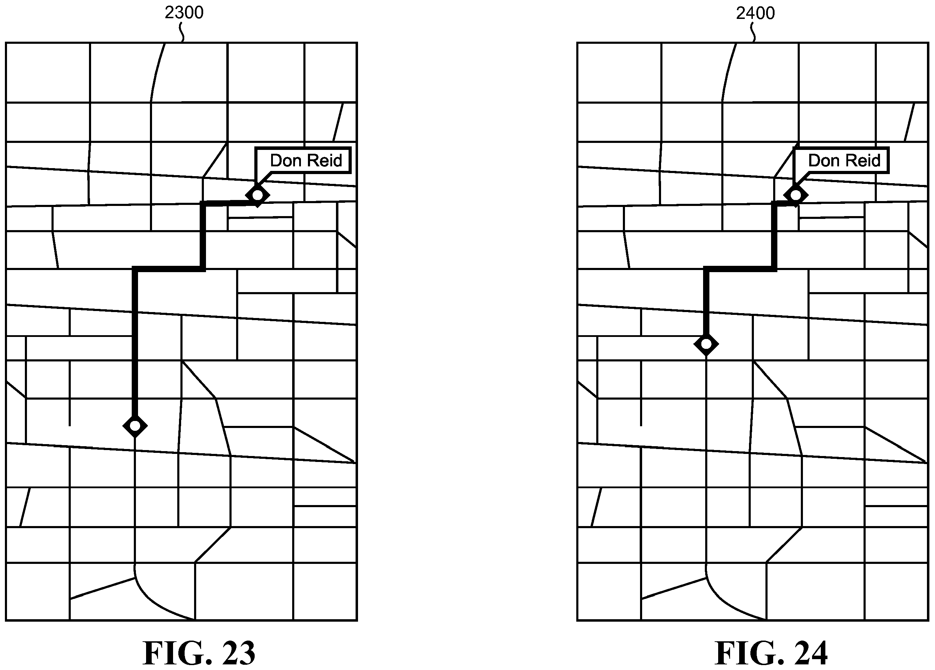

In some implementations, the notification can be surfaced on the device's lock screen (i.e., the screen that is typically displayed on the device to regulate access to the device), and/or on UIs that are being utilized by executing applications. As shown in UI 2200 in FIG 22, the lock screen 2205 is configured to persistently show location sharing information including, for example, an estimated meeting time 2210, the meeting participant 2215, and map 2220 showing current location and directions. The location information shown on the lock screen 2205 enables the user to easily check the location status and directions at a glance. The particular location information surfaced on the lock screen and its presentation can vary by implementation. Typically, the location sharing UIs are configured so that the user can access more detailed maps when desired. For example, a large map can be displayed full screen on the device as shown by UI 2300 in FIG 23. As noted above, the location sharing component can dynamically update the maps as the local and/or remote party's location changes as shown in UI 2400 in FIG 24.

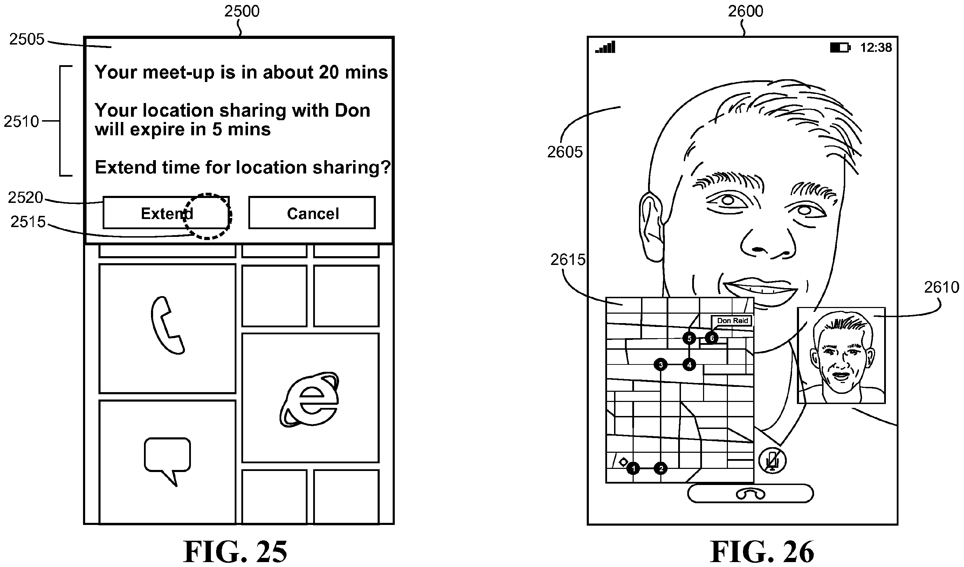

Sometimes during a location sharing experience a planned meet-up may get delayed for some reason (e.g., the parties decide to change the meet-up time and/or location, one of the parties is running late, etc.). In such cases it may be possible that the location sharing time period will be exceeded and the sharing will end before the meet-up will occur. By monitoring input, contextual, and/or historical data, the location sharing component can determine that there is some probability beyond a predetermined threshold that the estimated meet-up will actually occur after the expiration of the location sharing time period. Accordingly, as shown in the UI 2500 in FIG 25, the location sharing component can surface a notification 2505 that employs text 2510 to inform the user of the expiring time period and provide the opportunity to extend it. As shown, the user has employed a touch 2515 on the extend button 2520 to agree to the extension of the time period for location sharing with the remote user. A similar process can also be implemented in which a party can interact with an appropriate UI (not shown) to request that the other party extends its location sharing time period. That way, the time periods for sharing in both directions can be extended as needed.

Location sharing experiences can also be persisted in group meet-up scenarios. For example, the location sharing component can expose controls to enable parties on a call to share meet-up invites after the call ends. The controls may be configured so that a party can enable meet-up invites to be further shared by other invitees with others and the extent to which additional invitations are extended can be controlled by the party in some cases (e.g., by imposing a limit on the number of invitations and/or limiting the time period for sharing invitations). Typically in such group meet-up scenarios, the total number of invitations extended and the number of persons accepting can be tracked and reported back to an initiating party. In some cases, the initiating party can use controls exposed by the location sharing component to provide location information to the entire group of meet-up attendees or to just a subset of attendees.

While the illustrative examples of location sharing above are described in the context of a voice call, location sharing can also be implemented in the context of a video call. As shown in FIG 26, a UI 2600 exposed by a video calling app (e.g., app 445 in FIG 4) provides a relatively large canvas into which shared location information can be placed for display. As shown, the UI can be arranged to display the video image of the remote party in large view 2605, a small inset view 2610 of the user, and an active location sharing window 2615 that shows location information including, in this example, a map and directions. A similar and corresponding UI can be surfaced on the video calling application's screen on the remote device (not shown).

In some implementations, the location sharing window 2615 can be placed in a particular position on the UI 2600 by the user and/or enlarged or reduced in size. For example, the user can touch and drag the location sharing window 2615 into a desired position and enlarge and shrink the window using multi-touch gestures such as pinching and spreading.

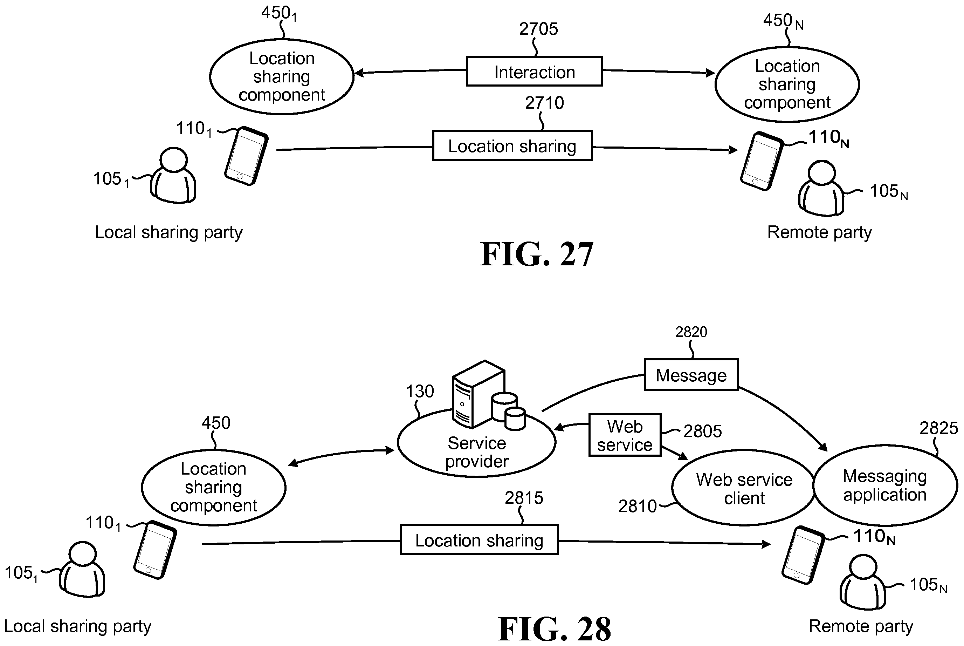

In some location sharing scenarios, each of the devices participating in the sharing (whether single instances of sharing or multi-instance sharing among two or more parties) can have a location sharing component installed and executing to support the location sharing user experience. This is shown in FIG 27 in which interaction (indicated by reference numeral 2705) typically occurs between individual instances of a location sharing component 450 on each of the devices 110 to facilitate location sharing 2710.

In other location sharing scenarios, one or more of the parties participating in the sharing may not have a location sharing component 450 instantiated. In such cases, location sharing may still be implemented with a full set of features and user experiences by leveraging capabilities provided by the remote service provider 130 as shown in FIG 28. The service provider 130 can provide a web service 2805 to a web service client 2810 such as a browser or other application on the remote device so that shared location information from the local location sharing component 450 can be furnished by the service provider to the client for rendering during location sharing 2815.

When the local sharing party initiates a sharing session, the service provider 130 can send a message 2820 to a messaging application 2825 that is available on the remote device. For example, the message 2820 can be a text message that is transported using SMS (Short Message Service) that contains a link to a location sharing experience that is facilitated by the web service 2805.

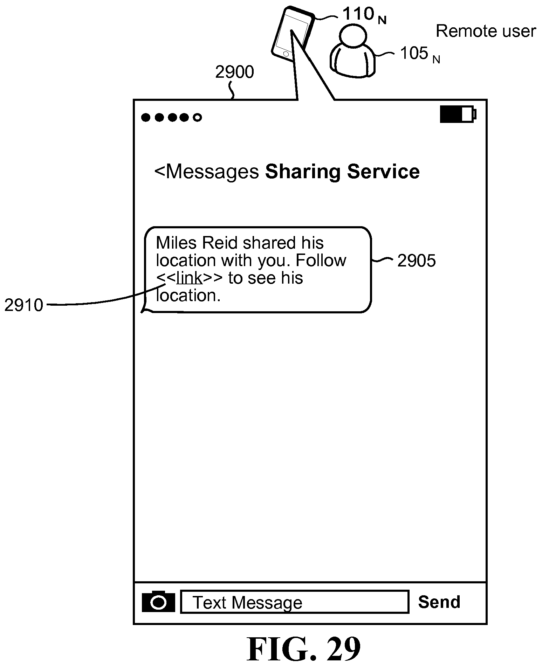

When the message 2820 is received by the messaging application 2825 it can typically surface the message in a UI, for example UI 2900 shown in FIG 29. In this example, the message sender is identified as "Sharing Service" and the displayed message 2905 includes a brief message that typically identifies the local sharing party by name (in this example, the local sharing party is named "Miles Reid") and includes a link 2910 that the remote party can follow to participate in the location sharing experience.

While the above illustrative examples are described in the context of voice and video calls, the present location sharing may also be implemented with asynchronous communication forms such as messaging and email. For example, a local party could send a text message or email at 4 pm to arrange a physical meet-up in which location sharing begins at 6 pm for a meet-up at 7 pm.

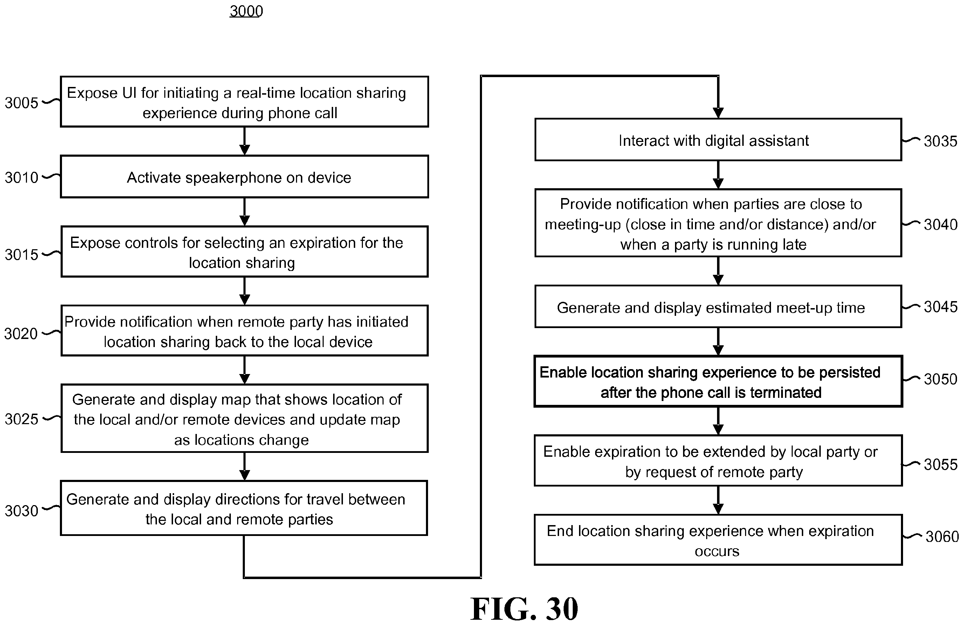

FIG 30 shows a flowchart of an illustrative method 3000 for real-time location sharing. Unless specifically stated, the methods or steps shown in the flowcharts below and described in the accompanying text are not constrained to a particular order or sequence. In addition, some of the methods or steps thereof can occur or be performed concurrently and not all the methods or steps have to be performed in a given implementation depending on the requirements of such implementation and some methods or steps may be optionally utilized.

In step 3005, a UI can be exposed for the local sharing party to initiate real-time location sharing with the remote party during a phone call. As noted above, the UI may be incorporated into the UI exposed by a voice calling application or video calling application. Upon initiation of the location sharing, the location sharing component can activate the device's speakerphone so that the user is able to view and interact with the UI in step 3010. In step 3015, the local sharing party may be enabled to select an expiration for the location sharing by interacting with various controls exposed by the UI. In step 3020, a notification can be surfaced when the remote user initiates location sharing from the remote device back to the local device. Typically, the local user is given options to accept or reject the location sharing from the remote user.

In step 3025, a map may be generated and displayed which shows the location of the local party, the remote party, or both the local and remote parties simultaneously. The map is dynamically updated to reflect changes in the parties' locations. In step 3030, directions for travel between the local and remotes parties may be generated and displayed, typically using the map along with graphics, text, and the like. In step 3035, the location sharing component can interact with a digital assistant, in some implementations, in order to facilitate and/or enhance the location sharing experiences for one or more of the parties.

In step 3040, a notification may be surfaced when the parties are close to meeting-up, in which closeness can be defined in terms of either time or distance. In some implementations, notifications can also be automatically surfaced to a party when the other party is running late and even in cases when the late-running party does not explicitly provide a notification. For example, the real-time location sharing component and/or service provider can estimate each party's progress in getting to the meet-up location and then provide the notification when it becomes evident that a party will be late. In some implementations, the personal digital assistant 910 (FIG 9) can be employed to suggest mitigations or alternatives when a party is determined to be running late to the meet-up. For example, if the meet-up is to see a movie, then the personal digital assistant can suggest alternative theater locations and show times that the parties can make in time.

In step 3045, an estimated meet-up time can be generated using available input and historical, environmental, contextual, and other data and displayed. In step 3050, enablement may be provided for persisting the location sharing experience after the phone call is ended. This may include providing continuing support for the dynamic mapping and the provision of directions and notifications. In group meet-up scenarios, the persisted location sharing experience can include invitation sharing, as described above. In step 3055, enablement can be provided for the location sharing expiration to be extended by the local party or in response to an extension request by the remote party. If not otherwise extended, the location sharing experience is ended upon the occurrence of the expiration.

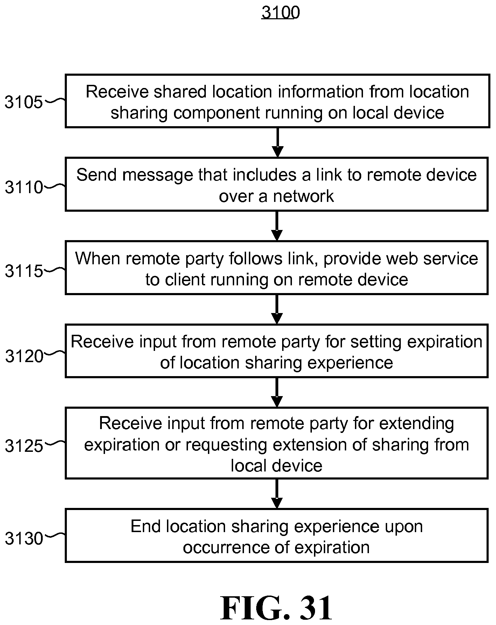

FIG 31 shows a flowchart of an illustrative method 3100 for facilitating real-time location sharing using a web service supported by a service provider (e.g., service provider 130 in FIG 1). In step 3105, shared location information may be received from a location sharing component that is operating on a local device. In some cases, shared location content is not received, but initiation of a real-time sharing session can otherwise be indicated to the service provider. In response, in step 3110, the service provider may send a message over a network to a remote device that includes a link that can be followed to access a real-time location sharing experience. For example, the message can be a text message that is sent over SMS.

In step 3115, when the remote party follows the link, a web service can be provided to a client that runs on the remote device. The web service can then render the real-time location sharing experience into the web service client such as a browser or other application. In step 3120, inputs are received for setting the expiration from the remote party for that party's location sharing. The web service can also receive inputs from the remote party for extending the expiration of location sharing (and/or requesting an extension for sharing from the local device) in step 3125.The web service may end the location sharing experience upon the occurrence of the expiration in step 3130.

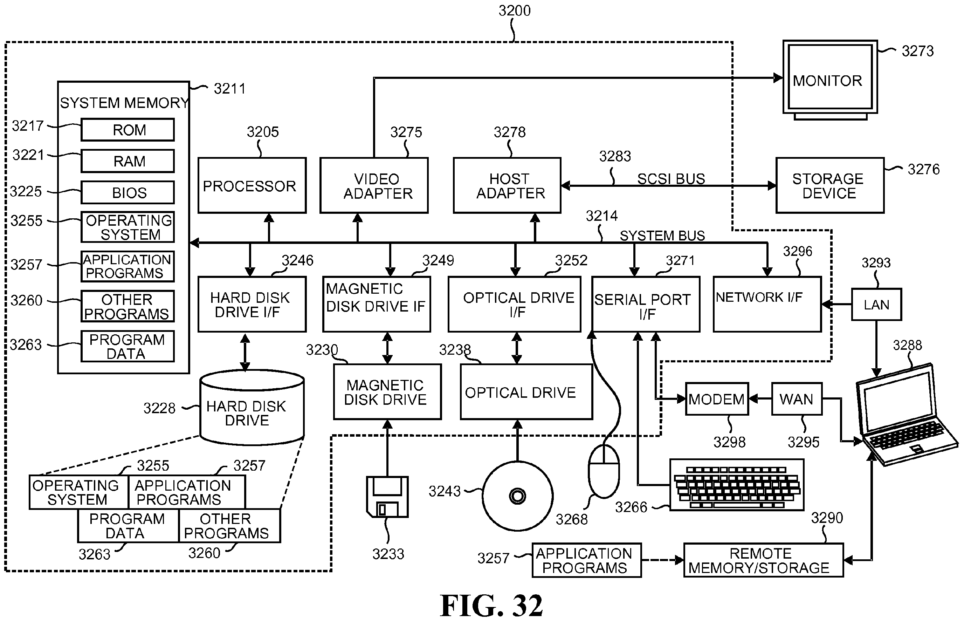

FIG 32 is a simplified block diagram of an illustrative computer system 3200 such as a PC, client machine, or server with which the present real-time location sharing during a phone call may be implemented. Computer system 3200 includes a processor 3205, a system memory 3211, and a system bus 3214 that couples various system components including the system memory 3211 to the processor 3205. The system bus 3214 may be any of several types of bus structures including a memory bus or memory controller, a peripheral bus, or a local bus using any of a variety of bus architectures. The system memory 3211 includes read only memory (ROM) 3217 and random access memory (RAM) 3221. A basic input/output system (BIOS) 3225, containing the basic routines that help to transfer information between elements within the computer system 3200, such as during startup, is stored in ROM 3217. The computer system 3200 may further include a hard disk drive 3228 for reading from and writing to an internally disposed hard disk (not shown), a magnetic disk drive 3230 for reading from or writing to a removable magnetic disk 3233 (e.g., a floppy disk), and an optical disk drive 3238 for reading from or writing to a removable optical disk 3243 such as a CD (compact disc), DVD (digital versatile disc), or other optical media. The hard disk drive 3228, magnetic disk drive 3230, and optical disk drive 3238 are connected to the system bus 3214 by a hard disk drive interface 3246, a magnetic disk drive interface 3249, and an optical drive interface 3252, respectively. The drives and their associated computer-readable storage media provide non-volatile storage of computer-readable instructions, data structures, program modules, and other data for the computer system 3200. Although this illustrative example includes a hard disk, a removable magnetic disk 3233, and a removable optical disk 3243, other types of computer-readable storage media which can store data that is accessible by a computer such as magnetic cassettes, Flash memory cards, digital video disks, data cartridges, random access memories (RAMs), read only memories (ROMs), and the like may also be used in some applications of the present real-time sharing during a phone call. In addition, as used herein, the term computer-readable storage media includes one or more instances of a media type (e.g., one or more magnetic disks, one or more CDs, etc.). For purposes of this specification and the claims, the phrase "computer-readable storage media" and variations thereof, does not include waves, signals, and/or other transitory and/or intangible communication media.

A number of program modules may be stored on the hard disk, magnetic disk 3233, optical disk 3243, ROM 3217, or RAM 3221, including an operating system 3255, one or more application programs 3257, other program modules 3260, and program data 3263. A user may enter commands and information into the computer system 3200 through input devices such as a keyboard 3266 and pointing device 3268 such as a mouse. Other input devices (not shown) may include a microphone, joystick, game pad, satellite dish, scanner, trackball, touchpad, touch screen, touch-sensitive device, voice-command module or device, user motion or user gesture capture device, or the like. These and other input devices are often connected to the processor 3205 through a serial port interface 3271 that is coupled to the system bus 3214, but may be connected by other interfaces, such as a parallel port, game port, or universal serial bus (USB). A monitor 3273 or other type of display device is also connected to the system bus 3214 via an interface, such as a video adapter 3275. In addition to the monitor 3273, personal computers typically include other peripheral output devices (not shown), such as speakers and printers. The illustrative example shown in FIG 32 also includes a host adapter 3278, a Small Computer System Interface (SCSI) bus 3283, and an external storage device 3276 connected to the SCSI bus 3283.

The computer system 3200 is operable in a networked environment using logical connections to one or more remote computers, such as a remote computer 3288. The remote computer 3288 may be selected as another personal computer, a server, a router, a network PC, a peer device, or other common network node, and typically includes many or all of the elements described above relative to the computer system 3200, although only a single representative remote memory/storage device 3290 is shown in FIG 32. The logical connections depicted in FIG 32 include a local area network (LAN) 3293 and a wide area network (WAN) 3295. Such networking environments are often deployed, for example, in offices, enterprise-wide computer networks, intranets, and the Internet.

When used in a LAN networking environment, the computer system 3200 is connected to the local area network 3293 through a network interface or adapter 3296. When used in a WAN networking environment, the computer system 3200 typically includes a broadband modem 3298, network gateway, or other means for establishing communications over the wide area network 3295, such as the Internet. The broadband modem 3298, which may be internal or external, is connected to the system bus 3214 via a serial port interface 3271. In a networked environment, program modules related to the computer system 3200, or portions thereof, may be stored in the remote memory storage device 3290. It is noted that the network connections shown in FIG 32 are illustrative and other means of establishing a communications link between the computers may be used depending on the specific requirements of an application of the present real-time sharing during a phone call.

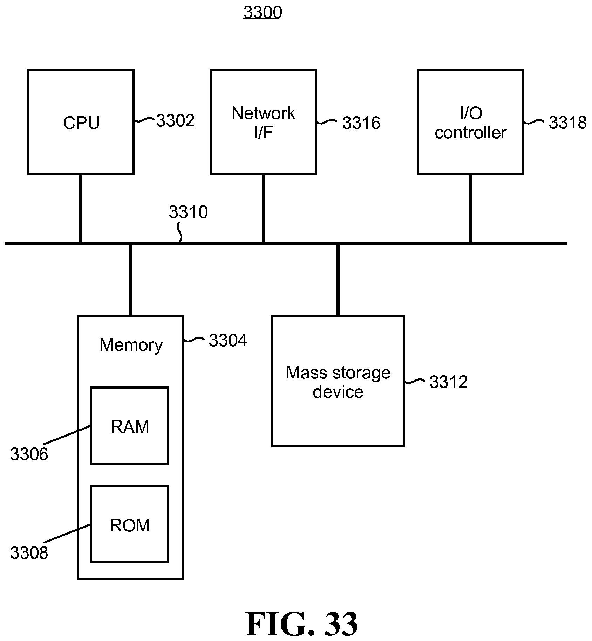

FIG 33 shows an illustrative architecture 3300 for a device capable of executing the various components described herein for providing the present real-timing sharing during a phone call. Thus, the architecture 3300 illustrated in FIG 33 shows an architecture that may be adapted for a server computer, mobile phone, a PDA, a smartphone, a desktop computer, a netbook computer, a tablet computer, GPS device, gaming console, and/or a laptop computer. The architecture 3300 may be utilized to execute any aspect of the components presented herein.

The architecture 3300 illustrated in FIG 33 includes a CPU (Central Processing Unit) 3302, a system memory 3304, including a RAM 3306 and a ROM 3308, and a system bus 3310 that couples the memory 3304 to the CPU 3302. A basic input/output system containing the basic routines that help to transfer information between elements within the architecture 3300, such as during startup, is stored in the ROM 3308. The architecture 3300 further includes a mass storage device 3312 for storing software code or other computer-executed code that is utilized to implement applications, the file system, and the operating system.

The mass storage device 3312 is connected to the CPU 3302 through a mass storage controller (not shown) connected to the bus 3310.The mass storage device 3312 and its associated computer-readable storage media provide non-volatile storage for the architecture 3300.

Although the description of computer-readable storage media contained herein refers to a mass storage device, such as a hard disk or CD-ROM drive, it may be appreciated by those skilled in the art that computer-readable storage media can be any available storage media that can be accessed by the architecture 3300.

By way of example, and not limitation, computer-readable storage media may include volatile and non-volatile, removable and non-removable media implemented in any method or technology for storage of information such as computer-readable instructions, data structures, program modules, or other data. For example, computer-readable media includes, but is not limited to, RAM, ROM, EPROM (erasable programmable read only memory), EEPROM (electrically erasable programmable read only memory), Flash memory or other solid state memory technology, CD-ROM, DVDs, HD-DVD (High Definition DVD), Blu-ray, or other optical storage, magnetic cassettes, magnetic tape, magnetic disk storage or other magnetic storage devices, or any other medium which can be used to store the desired information and which can be accessed by the architecture 3300.

According to various embodiments, the architecture 3300 may operate in a networked environment using logical connections to remote computers through a network. The architecture 3300 may connect to the network through a network interface unit 3316 connected to the bus 3310. It may be appreciated that the network interface unit 3316 also may be utilized to connect to other types of networks and remote computer systems. The architecture 3300 also may include an input/output controller 3318 for receiving and processing input from a number of other devices, including a keyboard, mouse, or electronic stylus (not shown in FIG 33). Similarly, the input/output controller 3318 may provide output to a display screen, a printer, or other type of output device (also not shown in FIG 33).

It may be appreciated that the software components described herein may, when loaded into the CPU 3302 and executed, transform the CPU 3302 and the overall architecture 3300 from a general-purpose computing system into a special-purpose computing system customized to facilitate the functionality presented herein. The CPU 3302 may be constructed from any number of transistors or other discrete circuit elements, which may individually or collectively assume any number of states. More specifically, the CPU 3302 may operate as a finite-state machine, in response to executable instructions contained within the software modules disclosed herein. These computer-executable instructions may transform the CPU 3302 by specifying how the CPU 3302 transitions between states, thereby transforming the transistors or other discrete hardware elements constituting the CPU 3302.

Encoding the software modules presented herein also may transform the physical structure of the computer-readable storage media presented herein. The specific transformation of physical structure may depend on various factors, in different implementations of this description. Examples of such factors may include, but are not limited to, the technology used to implement the computer-readable storage media, whether the computer-readable storage media is characterized as primary or secondary storage, and the like. For example, if the computer-readable storage media is implemented as semiconductor-based memory, the software disclosed herein may be encoded on the computer-readable storage media by transforming the physical state of the semiconductor memory. For example, the software may transform the state of transistors, capacitors, or other discrete circuit elements constituting the semiconductor memory. The software also may transform the physical state of such components in order to store data thereupon.

As another example, the computer-readable storage media disclosed herein may be implemented using magnetic or optical technology. In such implementations, the software presented herein may transform the physical state of magnetic or optical media, when the software is encoded therein. These transformations may include altering the magnetic characteristics of particular locations within given magnetic media. These transformations also may include altering the physical features or characteristics of particular locations within given optical media to change the optical characteristics of those locations. Other transformations of physical media are possible, with the foregoing examples provided only to facilitate this discussion.

In light of the above, it may be appreciated that many types of physical transformations take place in the architecture 3300 in order to store and execute the software components presented herein. It may also be appreciated that the architecture 3300 may include other types of computing devices, including handheld computers, embedded computer systems, smartphones, PDAs, and other types of computing devices known to those skilled in the art. It is also contemplated that the architecture 3300 may not include all of the components shown in FIG 33, may include other components that are not explicitly shown in FIG 33, or may utilize an architecture completely different from that shown in FIG 33.

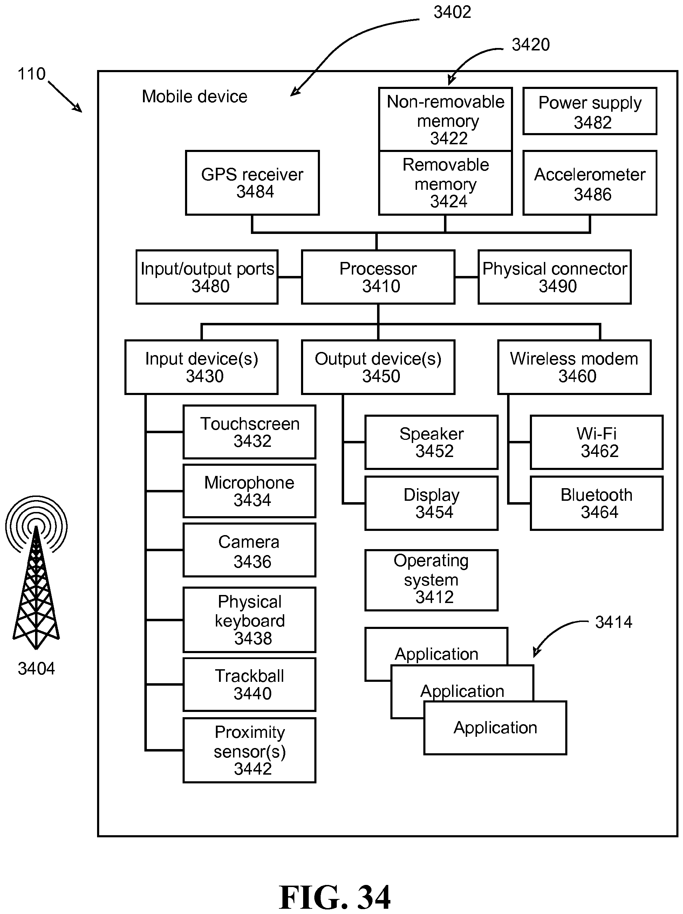

FIG 34 is a functional block diagram of an illustrative mobile device 110 such as a mobile phone or smartphone including a variety of optional hardware and software components, shown generally at 3402. Any component 3402 in the mobile device can communicate with any other component, although, for ease of illustration, not all connections are shown. The mobile device can be any of a variety of computing devices (e.g., cell phone, smartphone, handheld computer, PDA, etc.) and can allow wireless two-way communications with one or more mobile communication networks 3404, such as a cellular or satellite network.

The illustrated device 110 can include a controller or processor 3410 (e.g., signal processor, microprocessor, microcontroller, ASIC (Application Specific Integrated Circuit), or other control and processing logic circuitry) for performing such tasks as signal coding, data processing, input/output processing, power control, and/or other functions. An operating system 3412 can control the allocation and usage of the components 3402, including power states, above-lock states, and below-lock states, and provides support for one or more application programs 3414. The application programs can include common mobile computing applications (e.g., image-capture applications, email applications, calendars, contact managers, web browsers, messaging applications), or any other computing application.

The illustrated mobile device 110 can include memory 3420. Memory 3420 can include non-removable memory 3422 and/or removable memory 3424. The non-removable memory 3422 can include RAM, ROM, Flash memory, a hard disk, or other well-known memory storage technologies. The removable memory 3424 can include Flash memory or a Subscriber Identity Module (SIM) card, which is well known in GSM (Global System for Mobile communications) systems, or other well-known memory storage technologies, such as "smart cards." The memory 3420 can be used for storing data and/or code for running the operating system 3412 and the application programs 3414. Example data can include web pages, text, images, sound files, video data, or other data sets to be sent to and/or received from one or more network servers or other devices via one or more wired or wireless networks.

The memory 3420 may also be arranged as, or include, one or more computer-readable storage media implemented in any method or technology for storage of information such as computer-readable instructions, data structures, program modules or other data. For example, computer-readable media includes, but is not limited to, RAM, ROM, EPROM, EEPROM, Flash memory or other solid state memory technology, CD-ROM (compact-disc ROM), DVD, (Digital Versatile Disc) HD-DVD (High Definition DVD), Blu-ray, or other optical storage, magnetic cassettes, magnetic tape, magnetic disk storage or other magnetic storage devices, or any other medium which can be used to store the desired information and which can be accessed by the mobile device 110.

The memory 3420 can be used to store a subscriber identifier, such as an International Mobile Subscriber Identity (IMSI), and an equipment identifier, such as an International Mobile Equipment Identifier (IMEI). Such identifiers can be transmitted to a network server to identify users and equipment. The mobile device 110 can support one or more input devices 3430; such as a touch screen 3432; microphone 3434 for implementation of voice input for voice recognition, voice commands and the like; camera 3436; physical keyboard 3438; trackball 3440; and/or proximity sensor 3442; and one or more output devices 3450, such as a speaker 3452 and one or more displays 3454. Other input devices (not shown) using gesture recognition may also be utilized in some cases. Other possible output devices (not shown) can include piezoelectric or haptic output devices. Some devices can serve more than one input/output function. For example, touch screen 3432 and display 3454 can be combined into a single input/output device.

A wireless modem 3460 can be coupled to an antenna (not shown) and can support two-way communications between the processor 3410 and external devices, as is well understood in the art. The modem 3460 is shown generically and can include a cellular modem for communicating with the mobile communication network 3404 and/or other radio-based modems (e.g., Bluetooth 3464 or Wi-Fi 3462). The wireless modem 3460 is typically configured for communication with one or more cellular networks, such as a GSM network for data and voice communications within a single cellular network, between cellular networks, or between the mobile device and a public switched telephone network (PSTN).

The mobile device can further include at least one input/output port 3480, a power supply 3482, a satellite navigation system receiver 3484, such as a GPS receiver, an accelerometer 3486, a gyroscope (not shown), and/or a physical connector 3490, which can be a USB port, IEEE 1394 (FireWire) port, and/or an RS-232 port. The illustrated components 3402 are not required or all-inclusive, as any components can be deleted and other components can be added.

Based on the foregoing, it may be appreciated that technologies for real-time location sharing have been disclosed herein. Although the subject matter presented herein has been described in language specific to computer structural features, methodological and transformative acts, specific computing machinery, and computer-readable storage media, it is to be understood that the invention defined in the appended claims is not necessarily limited to the specific features, acts, or media described herein. Rather, the specific features, acts, and mediums are disclosed as example forms of implementing the claims.

The subject matter described above is provided by way of illustration only and may not be construed as limiting. Various modifications and changes may be made to the subject matter described herein without following the example embodiments and applications illustrated and described, and without departing from the scope of the present invention, which is set forth in the following claims.

## Claims

1. One or more computer-readable memories storing instructions which, when executed by one or more processors disposed in a device (110), implement a method for real-time sharing of location during a phone call between a local party and a remote party using respective local and remote devices, comprising:
during the phone call, exposing (3005) a user interface (1000, 1500) for initiating the real-time sharing of a current location of the local device with the remote device;
exposing (3015) one or more controls (1220) for selecting an expiration for the location sharing, in which location sharing is discontinued at the expiration, the expiration being expressed using time or the expiration being expressed using an occurrence of an event; and
displaying (3025) a map (1205, 1605) that graphically shows one of a location of the local device, a location of the remote device, or the locations of both the local and remote devices.

2. The one or more computer readable memories of claim 1 further including providing (3030) directions for traveling to a party's location, the directions being displayed on the map (1205, 1605).

3. The one or more computer-readable memories of claim 1 further comprising enabling (3010) a speakerphone function on the local device when the real-time location sharing is initiated.

4. The one or more computer-readable memories of claim 1 further including exposing the user interface for initiating the real-time location sharing as part of a user interface exposed by a calling application on the local device, the calling application being one of voice calling application or video calling application.

5. The one or more computer-readable memories of claim 1 further including providing (3040) a notification when the local and remote devices are within a predetermined distance of each other or when the local and remote devices are within a predetermined time interval of being substantially co-located based on an estimated travel speed of one or both of the parties.

6. The one or more computer-readable memories of claim 1 further including dynamically updating the map to reflect a change in a party's location.

7. The one or more computer-readable memories of claim 1 further including generating (3045) an estimated time for a meet-up between the parties based on one or more of a party's current location, a party's historical locations, or data that is descriptive of context or environment, and showing the estimated meet-up time on a user interface.

8. The one or more computer-readable memories of claim 1 further including enabling (3050) location to persist after the phone call terminated, the persistence having a duration that is substantially equal to the location sharing time period.

9. The one or more computer-readable memories of claim 1 further including providing (3055) one or more controls for a party to extend the location time period and providing one or more controls for a party to request a time period for location sharing be extended on another device.

10. The one or more computer-readable memories of claim 1 further including displaying location sharing information on a lock screen of the local device or on a lock screen of the remote device.

11. A system (3200; 3300), comprising:
one or more processors (3205; 3302);
a display (3273) that supports a user interface (1000, 1500) for interacting with a device; and
a memory (3211, 3228, 3233; 3304, 3312) storing computer-readable instructions which, when executed by the one or more processors, perform a method for real-time sharing of location information during a phone call between a local party and a remote party to facilitate a meet-up, the method comprising the steps of:
enabling initiation for sharing a location of a local device used by the local party with a remote device used by the remote party, the initiation being performable when the local device is engaged in the phone call,
providing one or more controls (1220) for user-selection of an expiration for the location sharing so that the location sharing stops upon occurrence of the expiration,
providing a notification that the remote user has initiated sharing of a location of the remote device with the local device,
displaying the local device location and remote device location simultaneously or at different times on the user interface using a map (1205, 1605) that is dynamically updated to show changes in device location,
generating directions for display on the map, the directions showing a travel route between the parties,
providing a notification when the parties are determined to be within a predetermined distance or are determined will be co-located within a predetermined time interval, and
enabling the expiration of location sharing to be extended by action of the local party or in response to a request from the remote party.

12. The system of claim 11 further comprising enabling interaction with the user interface using one of natural language, voice command, gesture, or physical contact using a touch screen or manipulation of a physical or a virtual control.

13. The system of claim 11 further comprising interacting with a digital assistant to invoke or control one or more of the method steps.

14. The system of claim 13 further comprising utilizing the digital assistant to provide a notification of a pending expiration of location sharing that is estimated to occur before the meet-up and enabling user interaction with the digital assistant to initiate the extending of the expiration.

15. The system of claim 11 further comprising determining a mode of travel of a party and providing directions or an estimated meet-up time using the determined mode of travel, the mode of travel including one of walking, travel by car, travel by plane, or travel using mass transportation.

## Patentansprüche

1. Ein oder mehrere computerlesbare Speicher, die Anweisungen speichern, die, wenn sie von einem oder mehreren in einer Vorrichtung (110) angeordneten Prozessoren ausgeführt werden, ein Verfahren zum Teilen von Standorten in Echtzeit während eines Telefonanrufs zwischen einem lokalen Teilnehmer und einem entfernten Teilnehmer implementieren, die jeweilige lokale und entfernte Vorrichtungen verwenden, umfassend:
während des Telefonanrufs, Exponieren (3005) einer Benutzerschnittstelle (1000, 1500) zum Initiieren der Teilung in Echtzeit eines gegenwärtigen Standortes der lokalen Vorrichtung mit der entfernten Vorrichtung;
Exponieren (3015) einer oder mehrerer Steuerungen (1220) zum Auswählen eines Ablaufs für die Standortteilung, wobei die Standortteilung bei Ablauf unterbrochen wird, wobei der Ablauf anhand der Verwendung von Zeit ausgedrückt wird oder der Ablauf anhand der Verwendung eines Stattfindens eines Ereignisses ausgedrückt wird; und
Anzeigen (3025) einer Karte (1205, 1605), die einen eines Standorts der lokalen Vorrichtung, eines Standorts der entfernten Vorrichtung oder von Standorten von beiden, der lokalen und der entfernten Vorrichtung grafisch darstellt.

2. Ein oder mehrere computerlesbare Speicher nach Anspruch 1, weiter beinhaltend das Bereitstellen (3030) von Richtungen zum Fortbewegen zum Standort eines Teilnehmers, wobei die Richtungen auf der Karte (1205, 1605) angezeigt werden.

3. Ein oder mehrere computerlesbare Speicher nach Anspruch 1, weiter umfassend das Ermöglichen (3010) einer Freisprechfunktion auf der lokalen Vorrichtung, wenn die Standortteilung in Echtzeit initiiert wird.

4. Ein oder mehrere computerlesbare Speicher nach Anspruch 1, weiter beinhaltend das Exponieren der Benutzerschnittstelle zum Initiieren der Standortteilung in Echtzeit als Teil einer Benutzerschnittstelle, die von einer Anrufanwendung auf der lokalen Vorrichtung exponiert wird, wobei die Anrufanwendung eine einer Sprachanrufanwendung oder einer Videoanrufanwendung ist.

5. Ein oder mehrere computerlesbare Speicher nach Anspruch 1, weiter beinhaltend das Bereitstellen (3040) einer Benachrichtigung, wenn die lokale und die entfernte Vorrichtung innerhalb einer vorbestimmten Entfernung voneinander liegen oder wenn die lokale und die entfernte Vorrichtung innerhalb eines vorbestimmten Zeitintervalls im Wesentlichen zusammen angeordnet sind, basierend auf einer geschätzten Fortbewegungsgeschwindigkeit einer oder beider Teilnehmer.

6. Ein oder mehrere computerlesbare Speicher nach Anspruch 1, weiter beinhaltend das dynamische Aktualisieren der Karte, um eine Änderung hinsichtlich des Standorts eines Teilnehmers widerzuspiegeln.

7. Ein oder mehrere computerlesbare Speicher nach Anspruch 1, weiter beinhaltend das Erzeugen (3045) einer geschätzten Zeit für ein Treffen zwischen den Teilnehmern basierend auf einem oder mehreren des gegenwärtigen Standorts eines Teilnehmers, der historischen Standorte eines Teilnehmers oder von Daten, die einen Kontext oder eine Umgebung beschreiben, und Darstellen der geschätzten Zeit für das Treffen auf einer Benutzerschnittstelle.

8. Ein oder mehrere computerlesbare Speicher nach Anspruch 1, weiter beinhaltend
Ermöglichen (3050), dass der Standort nach Beendigung des Telefonanrufs bestehen bleibt, wobei das Fortbestehen eine Dauer aufweist, die im Wesentlichen dem Standortteilungszeitraum entspricht.

9. Ein oder mehrere computerlesbare Speicher nach Anspruch 1, weiter beinhaltend
Bereitstellen (3055) einer oder mehrerer Steuerungen für einen Teilnehmer, um den Standortzeitraum zu verlängern und Bereitstellen einer oder mehrerer Steuerungen für einen Teilnehmer, um eine Verlängerung eines Zeitraums für eine Standortteilung auf einer anderen Vorrichtung anzufordern.

10. Ein oder mehrere computerlesbare Speicher nach Anspruch 1, weiter beinhaltend
Anzeigen von Standortteilungsinformationen auf einem Sperrbildschirm der lokalen Vorrichtung oder auf einem Sperrbildschirm der entfernten Vorrichtung.

11. System (3200; 3300), umfassend:
einen oder mehrere Prozessoren (3205; 3302);
eine Anzeige (3273), die eine Benutzerschnittstelle (1000, 1500) zum Interagieren mit einer Vorrichtung unterstützt; und
einen Speicher (3211, 3228, 3233; 3304, 3312), der computerlesbare Anweisungen speichert, die, wenn sie von dem einen oder den mehreren Prozessoren ausgeführt werden, ein Verfahren zum Teilen von Standortinformationen in Echtzeit während eines Telefonanrufs zwischen einem lokalen Teilnehmer und einem entfernten Teilnehmer durchführen, um ein Treffen zu erleichtern, wobei das Verfahren die folgenden Schritte umfasst:
Ermöglichen der Initiierung zum Teilen eines Standortes einer lokalen Vorrichtung, die von dem lokalen Teilnehmer verwendet wird, mit einer entfernten Vorrichtung, die von dem entfernten Teilnehmer verwendet wird, wobei die Initiierung ausführbar ist, wenn die lokale Vorrichtung an dem Telefonanruf beteiligt ist,
Bereitstellen einer oder mehrerer Steuerungen (1220) für eine Benutzerauswahl eines Ablaufs für die Standortteilung, sodass die Standortteilung bei Auftreten des Ablaufs endet,
Bereitstellen einer Benachrichtigung, dass der entfernte Benutzer die Teilung eines Standortes der entfernten Vorrichtung mit der lokalen Vorrichtung initiiert hat,
Anzeigen des lokalen Vorrichtungsstandortes und des entfernten Vorrichtungsstandortes gleichzeitig oder zu unterschiedlichen Zeiten auf der Benutzerschnittstelle unter Verwendung einer Karte (1205, 1605), die dynamisch aktualisiert wird, um Änderungen des Vorrichtungsstandortes anzuzeigen,
Erzeugen von Richtungen zum Anzeigen auf der Karte, wobei die Richtungen eine Fortbewegungsroute zwischen den Teilnehmern zeigen,
Bereitstellen einer Benachrichtigung, wenn bestimmt wird, dass sich die Teilnehmer innerhalb einer vorbestimmten Entfernung befinden, oder bestimmt wird, dass sie zusammen innerhalb eines vorbestimmten Zeitintervalls angeordnet sind, und
Ermöglichen einer Verlängerung des Ablaufs der Standortteilung durch eine Handlung des lokalen Teilnehmers oder als Antwort auf eine Anfrage vom entfernten Teilnehmer.

12. System nach Anspruch 11, weiter umfassend das Ermöglichen einer Interaktion mit der Benutzerschnittstelle unter Verwendung von natürlicher Sprache, Sprachbefehl, Gestik oder physischem Kontakt unter Verwendung eines Berührungsbildschirms oder Manipulation einer physischen oder einer virtuellen Steuerung.

13. System nach Anspruch 11, weiter umfassend das Interagieren mit einem digitalen Assistenten, um einen oder mehrere der Verfahrensschritte aufzurufen oder zu steuern.

14. System nach Anspruch 13, weiter umfassend das Nutzen des digitalen Assistenten, um eine Benachrichtigung über einen bevorstehenden Ablauf der Standortteilung bereitzustellen, der schätzungsweise vor dem Treffen stattfindet, und Ermöglichen einer Benutzerinteraktion mit dem digitalen Assistenten zur Initiierung der Verlängerung des Ablaufs.

15. System nach Anspruch 11, weiter umfassend das Bestimmen eines Fortbewegungsmodus eines Teilnehmers und Bereitstellen von Richtungen oder einer geschätzten Zeit des Treffens unter Verwendung des bestimmten Fortbewegungsmodus, wobei der Fortbewegungsmodus einer von Zufußgehen, Fahren mit dem Auto, Fliegen mit dem Flugzeug oder Fortbewegen mittels Massentransportmitteln umfasst.

## Revendications

1. Une ou plusieurs mémoires lisibles par ordinateur stockant des instructions qui, lorsqu'elles sont exécutées par un ou plusieurs processeurs disposés dans un dispositif (110), mettent en oeuvre un procédé pour le partage en temps réel d'un emplacement durant un appel téléphonique entre un correspondant local et un correspondant distant à l'aide de dispositifs respectivement local et distant, comprenant :
durant l'appel téléphonique, l'exposition (3005) d'une interface utilisateur (1000, 1500) pour déclencher le partage en temps réel d'un emplacement actuel du dispositif local avec le dispositif distant ;
l'exposition (3015) d'une ou de plusieurs commandes (1220) pour sélectionner une échéance pour le partage d'emplacement, dans laquelle le partage d'emplacement est interrompu à l'échéance, l'échéance étant exprimée à l'aide d'un temps ou l'échéance étant exprimée à l'aide de la survenance d'un événement ; et
l'affichage (3025) d'une carte (1205, 1605) qui présente graphiquement un parmi un emplacement du dispositif local, un emplacement du dispositif distant ou des emplacements à la fois du dispositif local et du dispositif distant.

2. Une ou plusieurs mémoires lisibles par ordinateur selon la revendication 1, incluant en outre la fourniture (3030) de directions pour un déplacement vers un emplacement de correspondant, les directions étant affichées sur la carte (1205, 1605).

3. Une ou plusieurs mémoires lisibles par ordinateur selon la revendication 1, comprenant en outre l'activation (3010) d'une fonction haut-parleur sur le dispositif local lorsque le partage d'emplacement en temps réel est déclenché.

4. Une ou plusieurs mémoires lisibles par ordinateur selon la revendication 1, incluant en outre l'exposition de l'interface utilisateur pour déclencher le partage d'emplacement en temps réel en tant que partie d'une interface utilisateur exposée par une application appelante sur le dispositif local, l'application appelante étant une parmi une application appelante vocale ou une application appelante vidéo.

5. Une ou plusieurs mémoires lisibles par ordinateur selon la revendication 1, incluant en outre la fourniture (3040) d'une notification lorsque les dispositifs local et distant sont à l'intérieur d'une distance prédéterminée l'un de l'autre ou lorsque les dispositifs local et distant sont à l'intérieur d'un intervalle de temps prédéterminé pour être sensiblement colocalisés sur la base d'une vitesse de déplacement estimée d'un ou des deux correspondants.

6. Une ou plusieurs mémoires lisibles par ordinateur selon la revendication 1, incluant en outre la mise à jour dynamique de la carte pour refléter un changement d'un emplacement d'un correspondant.

7. Une ou plusieurs mémoires lisibles par ordinateur selon la revendication 1, incluant en outre la génération (3045) d'une heure estimée pour une rencontre entre les correspondants sur la base d'un ou de plusieurs parmi un emplacement actuel d'un correspondant, des emplacements historiques d'un correspondant ou des données qui décrivent un contexte ou un environnement, et la présentation de l'heure de rencontre estimée sur une interface utilisateur.

8. Une ou plusieurs mémoires lisibles par ordinateur selon la revendication 1, incluant en outre l'activation (3050) de la conservation d'un emplacement après que l'appel téléphonique est terminé, la conservation ayant une durée qui est sensiblement égale à la période de temps de partage d'emplacement.

9. Une ou plusieurs mémoires lisibles par ordinateur selon la revendication 1, incluant en outre la fourniture (3055) d'une ou de plusieurs commandes à un correspondant pour étendre la période de temps d'emplacement et la fourniture d'une ou plusieurs commandes à un correspondant pour demander une période de temps pour que le partage d'emplacement soit étendu sur un autre dispositif.

10. Une ou plusieurs mémoires lisibles par ordinateur selon la revendication 1, incluant en outre l'affichage d'informations de partage d'emplacement sur un écran verrouillé du dispositif local ou sur un écran verrouillé du dispositif distant.

11. Système (3200 ; 3300), comprenant :
un ou plusieurs processeurs (3205 ; 3302) ;
un dispositif d'affichage (3273) qui prend en charge une interface utilisateur (1000, 1500) pour interagir avec un dispositif ; et
une mémoire (3211, 3228, 3233 ; 3304, 3312) stockant des instructions lisibles par ordinateur qui, lorsqu'elles sont exécutées par les un ou plusieurs processeurs, réalisent un procédé de partage en temps réel d'informations d'emplacement durant un appel téléphonique entre un correspondant local et un correspondant distant pour faciliter une rencontre, le procédé comprenant les étapes consistant à :
activer un déclenchement pour partager un emplacement d'un dispositif local utilisé par le correspondant local avec un dispositif distant utilisé par le correspondant distant, le déclenchement étant réalisable lorsque le dispositif local est impliqué dans l'appel téléphonique,
fournir une ou plusieurs commandes (1220) pour une sélection par un utilisateur d'une échéance pour le partage d'emplacement de sorte que le partage d'emplacement s'arrête lors d'une survenance de l'échéance,
fournir une notification selon laquelle l'utilisateur distant a déclenché le partage d'un emplacement du dispositif distant avec le dispositif local,
afficher l'emplacement du dispositif local et l'emplacement du dispositif distant simultanément ou à des temps différents sur l'interface utilisateur à l'aide d'une carte (1205, 1605) qui est dynamiquement mise à jour pour présenter des changements d'emplacements de dispositif,
générer des directions à afficher sur la carte, les directions présentant un itinéraire de déplacement entre les correspondants,
fournir une notification lorsqu'il est déterminé que les correspondants sont à l'intérieur d'une distance prédéterminée ou qu'il est déterminé qu'ils seront colocalisés à l'intérieur d'un intervalle de temps prédéterminé, et
activer l'extension de l'échéance de partage d'emplacement par une action du correspondant local ou en réponse à une demande du correspondant distant.

12. Système selon la revendication 11, comprenant en outre l'activation d'une interaction avec l'interface utilisateur à l'aide d'un parmi un langage naturel, une commande vocale, un geste ou un contact physique à l'aide d'un écran tactile, ou une manipulation d'une commande physique ou virtuelle.

13. Système selon la revendication 11, comprenant en outre l'interaction avec un assistant numérique pour impliquer ou commander une ou plusieurs des étapes de procédé.

14. Système selon la revendication 13, comprenant en outre l'utilisation de l'assistant numérique pour fournir une notification d'une échéance en attente de partage d'emplacement qui est estimée survenir avant la rencontre et l'activation d'une interaction d'utilisateur avec l'assistant numérique pour déclencher l'extension de l'échéance.

15. Système selon la revendication 11 comprenant en outre la détermination d'un mode de déplacement d'un correspondant et la fourniture de directions ou d'une heure de rencontre estimée à l'aide du mode de déplacement déterminé, le mode de déplacement incluant un parmi une marche, un déplacement en voiture, un déplacement en avion ou un déplacement à l'aide d'un moyen de transport de masse.
